# EUROPEAN PATENT APPLICATION

(11) **EP 3 678 275 A1**
(43) Date of publication of application: **08.07.2020**
(21) Application number: 17923379.6
(22) Date of filing: 30.08.2017
(51) Int. Cl.: H02J 7/00, B60L 53/80, B60L 58/12, B60L 58/21, B60L 58/22, H02J 7/34

(54) **RECHARGING SYSTEM FOR ELECTRIC VEHICLES**

(71) Applicant: Bernabé Panós, Jorge José, 50006 Zaragoza (ES)
(72) Inventor: Bernabé Panós, Jorge José, 50006 Zaragoza (ES)
(74) Representative: Ungria López, Javier
(86) International application number: PCT/ES2017/070592
(87) International publication number: WO 2019/043273

(57) **Abstract**

The present invention relates to a recharging system for electric vehicles. The system comprises: two identical batteries (1, 2) with two commutators (11, 12) for connecting the batteries to a motor (3) or to a recharging circuit (13, 15, 17, 18). The recharging circuit can be connected to an auxiliary portable battery (4) and comprises an adapter circuit (13) in series with a switch (15). The system also comprises: two sensors (6, 7) that measure, at least, the charge of the batteries; a third sensor (16) that measures, at least, the presence and charge of the portable battery; a fourth sensor (19) that detects, at least, the position of an accelerator pedal; and a control unit (8) which, on the basis of the measurements from the sensors, manages the charge of the two identical batteries (1, 2) by controlling the commutators and switches by means of corresponding actuators (9, 10, 14).

## Description

### OBJECT OF THE INVENTION

The following invention relates to a recharging system for electric vehicles, which is based on incorporating a pair of identical batteries, usually connected in parallel, having the same supply voltage of the motor, said pair of batteries having a capacity that is similar to that of a conventional battery used in electric vehicles; as well as incorporating, if deemed convenient, an auxiliary energy source that can be connected to the pair of batteries, the essential purpose of which is to allow the pair of batteries to be charged while the vehicle is running.

In addition, the system incorporates a series of sensors associated with the pair of batteries, the auxiliary energy source and, at least, the accelerator of the electric vehicle, and communicated to a control unit that manages the charge of the two batteries by controlling commutators and switches by means of actuators.

### BACKGROUND OF THE INVENTION

It is well known that one of the main problems of electric vehicles (referring to pure electric vehicles, not hybrids) is the time required for recharging their batteries.

Under normal conditions, fully recharging involves stopping the vehicle for several hours, which is not acceptable in certain circumstances, such as in the middle of a road trip.

On the other hand, it should be noted that several vehicles may need to recharge quickly at the same time, due to which the charging station would not be able to serve everyone at once, increasing the time needed for recharging. In other words, the problem is not only the time for recharging, but also the time spent waiting until a charging point becomes available. We must take into consideration the short time it takes to refuel the fuel tank at the gas station, as well as the queues that sometimes form and the queues that would form with the times required for any electric recharging. The time spent recharging may be shorter if fast recharging systems are available, but this requires significant electric power at the charging station. In fact, the number of high-power, fast-charging stations is still low.

In order to solve these problems, significant work is being done in the development of batteries with increasingly greater energy storage capacity, which means greater vehicle autonomy, as well as in the installation of more and faster charging stations. In any case, the problem remains to be solved in its entirety.

### DESCRIPTION OF THE INVENTION

This specification describes a recharging system for electric vehicles designed to alleviate the aforementioned problem as much as possible. The electric vehicles object of the present invention are 100% electric, with an electric motor powered by a battery. They are not hybrid vehicles.

The recharging system for electric vehicles of the present invention comprises: a first battery and a second battery, of identical voltage and other characteristics, connected in parallel; a first commutator and a second commutator connected in series with the first battery and the second battery, respectively; wherein each commutator switches the connection of the batteries between a connection to an electric motor and a connection to a recharging circuit; a first actuator and a second actuator associated with the first commutator and the second commutator, respectively; wherein the first commutator and the second commutator are controlled by the first actuator and the second actuator, respectively; an auxiliary energy source connectable in parallel to the first battery and the second battery via the recharging circuit, which comprises: an adapter circuit in series with a first switch controlled by a third actuator; a first sensor and a second sensor situated on the first battery and on the second battery, respectively; wherein the sensors measure at least the charge of the batteries; a third sensor associated with the auxiliary energy source, wherein the third sensor measures at least the charge, voltage and other parameters of the auxiliary source as well as its own presence; a fourth sensor situated on an accelerator of an electric vehicle; wherein said fourth sensor measures at least one accelerator position; and a control unit communicated to the sensors and the actuators; such that the control unit manages the charging process of the first battery and of the second battery by controlling the first commutator, the second commutator and the first switch on the basis of measurements taken by the first sensor, the second sensor, the third sensor and the fourth sensor.

Thus, it is a question of replacing the conventional battery available in electric vehicles, in reference to pure electric vehicles (non-hybrid), and incorporating a pair of batteries of identical voltage and other characteristics, usually connected in parallel, and an auxiliary energy source, such as a portable battery or similar, to ensure that the motor of the electric vehicle is supplied by the pair of batteries and connects automatically to the auxiliary energy source to continue running as soon as the batteries are about to run out.

The capacity of the set of the first and the second battery connected in parallel is similar to the capacity of a conventional battery used in electric vehicles.

In an embodiment of the invention, the auxiliary energy source is a portable battery or equivalent device capable of delivering electrical energy.

This embodiment is especially relevant as it has several advantages. The first is that it makes it possible to eliminate waiting times at the charging points since the discharged portable battery of the electric vehicle is replaced at a road charging station or similar facility by a battery previously charged at a charging point. It increases the autonomy of the electric vehicle by adding the charge of the portable battery to the charge of the first and the second battery. It makes it possible to charge the first and the second battery of the vehicle when the vehicle is in motion, such that the time between two charging stations is used to charge the first and the second battery of the electric vehicle.

In an embodiment of the invention, the auxiliary energy source is an external source, such as a portable battery, which is connectable in parallel to the first battery and the second battery via the recharging circuit, which comprises: an adapter circuit in series with a switch.

In an embodiment of the invention, when the control unit detects, by means of the first sensor and the second sensor, that the first battery and the second battery are charged, said control unit switches the first battery and the second battery by connecting them to the electric motor to supply the same.

In an embodiment of the invention, when the control unit detects, by means of the first sensor and the second sensor, that the first battery and that the second battery are discharged, said control unit switches the first battery and the second battery by connecting them to the recharging circuit to charge said batteries simultaneously.

In an embodiment of the invention, when the control unit detects, by means of the first sensor and the second sensor, that the first battery and the second battery have a certain minimum charge, said control unit first sends a signal to inform the driver that it is necessary to place a charged auxiliary portable battery, if none is already in place or if said portable battery in place is discharged; and, on the other hand, it sends orders to the first and the second actuator at predetermined time intervals so that, alternatively, in order for the charging of the two batteries to remain balanced, one battery is connected to the electric motor and the other battery is connected to the recharging circuit to ensure that the electric motor is supplied and the first and the second battery are recharged simultaneously.

Within the previous embodiment of the invention, when the control unit detects, by means of the fourth sensor, a specific demand of greater power for the electric motor, the control unit gives the order to connect the first battery and the second battery exclusively to the electric motor.

To supplement the description that is made below, and in order to aid a better understanding of the characteristics of the invention, this specification is accompanied by a set of drawings which represent the most characteristic details of the invention in an illustrative and non-limiting manner.

### BRIEF DESCRIPTION OF THE FIGURES

Figure 1 shows a view of the general circuit diagram of the recharging system for electric vehicles. Specifically, it shows how one battery supplies the electric motor of the vehicle and the auxiliary energy source charges the other battery.
Figure 2 shows a schematic view of the circuit diagram with the vehicle running, wherein the first and the second battery supply the electric motor.
Figure 3 shows a view of the circuit diagram, with the vehicle stopped and while charging the first and second battery with the auxiliary energy source.
Figure 4 shows a schematic view of the circuit diagram with the vehicle stopped, charging the first and second battery by means of a conventional external source (charging point).
Figures 5a and 5b show the circuit diagrams with the vehicle running while charging the first and second battery with the auxiliary energy source simultaneously. In order to keep the charge of the two batteries balanced, the charging function (from the auxiliary energy source) and discharging function (supplying the electric motor) are exchanged between the two batteries at small time intervals.

### DESCRIPTION OF A PREFERRED EMBODIMENT

In view of the aforementioned figures and subject to the numbering adopted therein, we can see how the recharging system for electric vehicles is based on incorporating a first battery 1 and a second battery 2 connected in parallel, which can be connected to the supply circuit of the electric motor 3 or to the recharging circuit, which can be connected to an auxiliary energy source 4 or to a conventional external energy source 5.

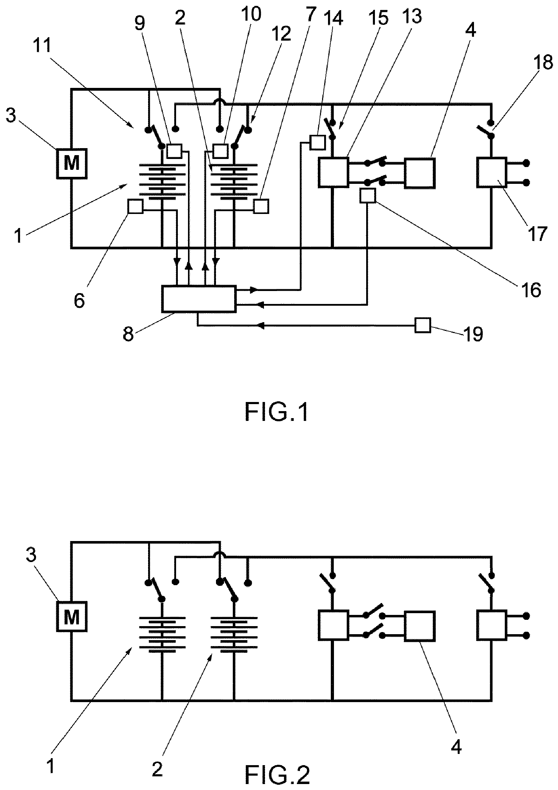

In the embodiment shown in Figure 1, the first and second battery 1 and 2 have a first and a second sensor 6 and 7, respectively, communicated to the control unit 8 to which they send information regarding the status of the corresponding battery, such as the charge, voltage and/or other parameters, in order for the control unit 8 to send the appropriate orders based thereon to a first and second actuator 9 and 10 to actuate a first and second commutator 11 and 12, associated with the first and second battery 1 and 2, in order to allow them to switch to the supply circuit of electric motor 3 or to the recharging circuit, either from the auxiliary energy source 4 or from the external source 5.

The auxiliary energy source 4, such as a portable battery, has the corresponding first adapter circuit 13 to adjust the current to the characteristics of the first and the second battery 1 and 2. In other words, the only object of the adapter circuit 13 is to ensure that the energy supplied is compatible with the first and second battery 1 and 2. The adapter circuit 13 is in series with a switch 15, to which a third actuator 14 is associated that communicates to the control unit 8 to actuate the first connection switch 15 to the recharging and supply circuit of the first and second battery 1 and 2.

The auxiliary energy source 4 has a third sensor 16 that controls and communicates to the control unit 8 different parameters as to the status thereof, such as the charge, voltage, whether it is connected or not, etc.

In addition, the conventional external recharging source 5 of the first and second battery 1 and 2 is associated with the corresponding second adapter circuit 17, and a second connection switch 18 for conventional recharging has also been represented.

Thus, as represented in Figure 2, with the first and second battery 1 and 2 charged and with the first commutator and second commutator 11 and 12 associated therewith connected to the supply circuit of the electric motor 3 of the vehicle, the vehicle operates normally.

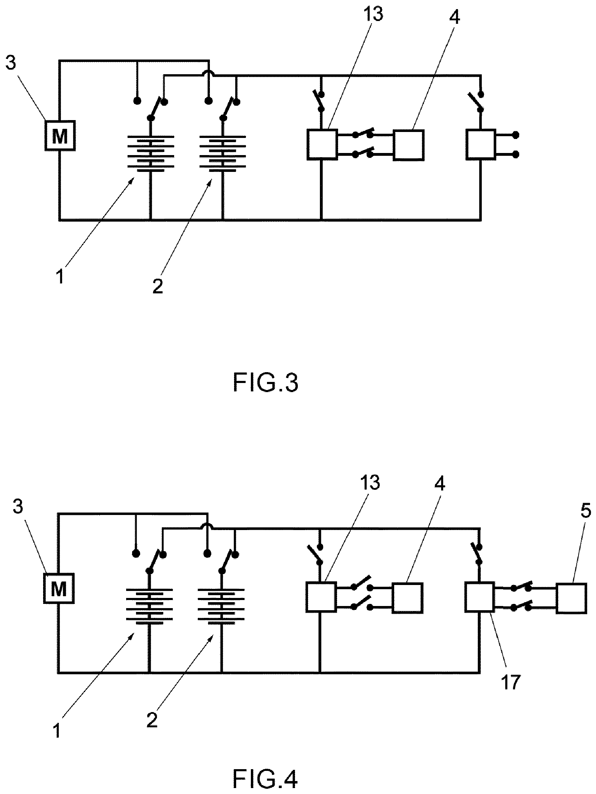

On the other hand, as shown in Figure 3, with the vehicle stopped and while the first and the second battery 1 and 2 are being recharged, i.e., with the first commutator and second commutator 11 and 12 associated therewith connected to the circuit relative to the external energy source 5 and the auxiliary energy source 4, the second switch 18 being disconnected relative to the external supply source 5, and the first switch 15 being connected relative to the auxiliary energy source 4, the first and the second battery 1 and 2 are simultaneously charged from the auxiliary energy source 4.

Likewise, as shown in Figure 4, with the vehicle stopped and while the first and second battery 1 and 2 are being recharged, i.e., with the first commutator and second commutator 11 and 12 associated therewith connected to the circuit relative to the external energy source 5 and the auxiliary energy source 4, the second switch 18 being connected relative to the external supply source 5, and the first switch 15 being disconnected relative to the auxiliary energy source 4, the first and second battery 1 and 2 are simultaneously charged from the external supply source 5.

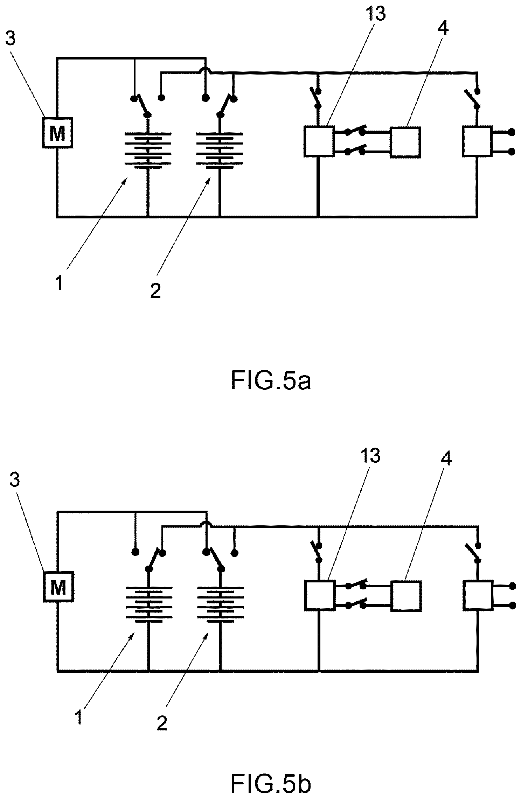

Finally, as represented in Figures 5a and 5b, as well as in Figure 1, with the vehicle running and with the detection, through the first and second sensor 6 and 7 associated with the first and second battery 1 and 2, of a certain minimum charge level and the corresponding communication of this circumstance to the control unit 8, said control unit sends orders to the first and second actuator 9 and 10 at predetermined time intervals such that, alternatively, in order to keep the charge of the two batteries balanced, one battery is connected to the supply circuit of the electric motor 3 and the other is connected to the circuit associated with the auxiliary energy source 4, which allows the vehicle to run normally and the simultaneous recharging of the first and second battery.

Thus, by switching the first and second commutator 11 and 12 alternatively at each predetermined time interval to the supply circuit of the electric motor 3 and to the recharging circuit associated with the auxiliary energy source 4, the first and second battery 1 and 2 are charged in a balanced manner to ensure that the charge of both batteries is always roughly the same.

With the system in this state and under certain circumstances of the running of the vehicle, such as a potential necessary acceleration, the detection and communication to the control unit 8, by a fourth sensor 19 associated with the accelerator, said control unit 8 sends an order to the first and second actuator 9 and 10 such that the first and second commutator 11 and 12 associated with the first and second battery 1 and 2 are both switched to the supply circuit of the motor, thus transmitting all available power in the batteries 1 and 2 to the electric motor 3.

Thus, whenever it is advisable to recharge the first and second battery (on the condition that they are not fully depleted) and it is not desirable to wait with the car stopped while recharging, or if a charging station is simply not available, the journey can continue while recharging both batteries of the vehicle such that a first battery provides the necessary energy to the electric motor of the vehicle to continue the journey, ensuring that the journey continues at a moderate speed requiring half or less of the maximum power, while, simultaneously, the second battery is recharged as the journey continues thanks to the energy supplied by the portable auxiliary electrical energy source, which has been picked up at a road charging station and has been placed in the vehicle, and which can be replaced with a similar charged source at the next charging station.

In addition, if at a certain point in the journey, power greater than half of the maximum power is required (e.g., when stepping on the accelerator above a certain limit), the auxiliary energy source would be disconnected and the two batteries would be connected in parallel once again, which allows them to provide up to the maximum available power.

To prevent the two batteries from having different charges, their charging or discharging function would be exchanged at regular, predetermined time intervals (a number of seconds, as appropriate, according to the requirements of the battery charging process).

The auxiliary energy source can be a conventional, portable or at least manageable battery, such as normal starter batteries (lead, etc.) or a special battery designed for this purpose (lithium or other technology, etc.) or any other similar element capable of delivering energy: a supercapacitor, a small electrical energy generator, etc. Said auxiliary energy source would be placed, by fastening and connecting it appropriately, for example, in the boot of the vehicle or in another suitable location inside the vehicle.

The advantages of the system object of the invention include:

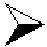 Compatibility:

The new system is fully compatible with the recharging systems of current electric cars, as an additional option that can be used when it is necessary to continue travelling without long waits when the batteries have a low charge.

Both batteries are usually connected in parallel, charging, as usual, in charging stations and becoming discharged, also as usual, during travel.

In other words, everything remains the same as with current electric vehicles and their charging stations.

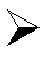 The recharging can be done with the car running or while parked:

The new system makes it possible to charge the batteries while the vehicle is running, as mentioned above, and also while the vehicle is stopped. This also reduces the problem whenever there are no free plugs at the charging station and prevents the station from losing that customer, as it can provide a portable battery as an alternative to the lack of free plugs.

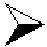 Versatility:

Any battery that can be picked up at a charging station or any workshop can be used, as well as one or more batteries, the purpose essentially being to make the ways and times of acquiring additional energy more flexible. In the case of short journeys and sufficient availability of nearby charging points and, therefore, no risk of depleting the batteries, there is no need to always carry a portable auxiliary battery in the vehicle.

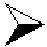 Use in "forecast" mode:

As with mobile phones, which we recharge whenever we have the opportunity to do so as a result of the fear of running out of battery, the new system makes it possible to recharge the battery of the vehicle (the set of the first and second battery) while on the journey.

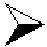 Better use of hours corresponding to lower electricity costs:

At the charging station, auxiliary batteries could be charging continuously, taking advantage of the night hours when energy prices are lower.

Thus, the proposed system is essentially based on:
- If two batteries of the same voltage (volts) are connected in parallel, the resulting voltage is the voltage of any of the batteries, but the resulting intensity (amps) is the sum of the two intensities, thus doubling the supplied electric power.
   - The engine of any car reaches its maximum power only in certain extreme situations (strong acceleration, high speed, climbs, combinations of the above, etc.). Most of the time (driving at moderate speeds, etc.), it is normal for the engine to reach less than half its maximum power.
   - A battery cannot be charged and discharged simultaneously. A battery is charged or discharged, but both processes cannot occur at the same time.
   - Therefore, the new system is based on the use of two batteries, combined with the application of the other elements described above.

## Claims

1. A RECHARGING SYSTEM FOR ELECTRIC VEHICLES, **characterised in that** it comprises:
- a first battery (1) and a second battery (2), which are identical;
- a first commutator (11) and a second commutator (12) connected in series with the first battery (1) and with the second battery (2), respectively; wherein each commutator (11, 12) switches the connection of each of the batteries (1, 2) between a connection to an electric motor (3) and a connection to a recharging circuit (13, 15, 17, 18);
- a first actuator (9) and a second actuator (10) associated with the first commutator (11) and with the second commutator (12), respectively; wherein the first commutator (11) and the second commutator (12) are controlled by the first actuator (9) and the second actuator (10), respectively;
- an auxiliary energy source (4) connectable in parallel to the first battery (1) and the second battery (2) via the recharging circuit (13, 15), which comprises: an adapter circuit (13) in series with a first switch (15) controlled by a third actuator (14);
- a first sensor (6) and a second sensor (7) situated on the first battery (1) and on the second battery (2), respectively; wherein the sensors (6, 7) measure at least the charge of the batteries (1, 2);
- a third sensor (16) applied to the auxiliary energy source (4), wherein the third sensor measures at least the voltage and charge of the auxiliary source (4), also detecting its own presence;
- a fourth sensor (19) situated on an accelerator of an electric vehicle; wherein said fourth sensor measures at least one accelerator position, and;
- a control unit (8) communicated to the sensors (6, 7, 16, 19) and to the actuators (10, 11, 14);
such that the control unit (8) manages the charging process of the first battery (1) and of the second battery (2) by controlling the first commutator (11), the second commutator (12) and the first switch (15) on the basis of measurements taken by the first sensor (6), the second sensor (7), the third sensor (16) and the fourth sensor (19).

2. THE RECHARGING SYSTEM FOR ELECTRIC VEHICLES according to claim 1, **characterised in that** the auxiliary energy source (4) is a portable battery or equivalent device capable of delivering electrical energy.

3. THE RECHARGING SYSTEM FOR ELECTRIC VEHICLES according to claim 1, **characterised in that** the external energy source is a conventional charging point (5) connectable in parallel to the first battery (1) and to the second battery (2) via the recharging circuit (17, 18), which comprises: an adapter circuit (17) in series with a second switch (18).

4. THE RECHARGING SYSTEM FOR ELECTRIC VEHICLES according to claim 1, **characterised in that** when the control unit (8) detects through the first sensor (6) and the second sensor (7) that the first battery (1) and the second battery (2) are sufficiently charged, said control unit switches the first battery (1) and the second battery (2) to the electric motor (3) for supplying the same.

5. THE RECHARGING SYSTEM FOR ELECTRIC VEHICLES according to claim 1, **characterised in that** when the control unit (8) detects through the first sensor (6) and the second sensor (7) that the first battery (1) and the second battery (2) are discharged, said control unit switches the first battery (1) and the second battery (2) to the corresponding recharging circuit (13, 15, 17, 18) for simultaneously charging said batteries (1, 2) using the circuit (17, 18) when the connection to a conventional charging point is possible and the circuit (13, 15) when that is not possible.

6. THE RECHARGING SYSTEM FOR ELECTRIC VEHICLES according to claims 1 and 2, **characterised in that** when the control unit (8) detects through the first sensor (6) and the second sensor (7) that the first battery (1) and the second battery (2) have a charge below a certain level, said control unit (8) sends orders to the first and the second actuator (9, 10) at predetermined time intervals so that, alternatively, in order for the charge of the two batteries to remain balanced, one battery is connected to the electric motor (3) and the other battery is connected to the recharging circuit (13, 15), such that, simultaneously, the electric motor (3) is supplied and the first and second batteries are recharged.

7. THE RECHARGING SYSTEM FOR ELECTRIC VEHICLES according to claims 1 and 6, **characterised in that** when the control unit (8) detects by means of the fourth sensor (19) a specific demand of greater power for the electric motor (3), said control unit connects the first battery (1) and the second battery (2) to the electric motor (3), thus resulting in the two batteries working in parallel, providing the motor with the maximum power available.
